# EUROPÄISCHE PATENTSCHRIFT

(11) **EP 3 392 540 B1**
(45) Veröffentlichungstag und Bekanntmachung des Hinweises auf die Patenterteilung: **22.01.2020**
(21) Anmeldenummer: 17465516.7
(22) Anmeldetag: 21.04.2017
(51) Int. Cl.: F16K 41/02

(54) **FLÜSSIGKEITSAUFFANG- UND VERDAMPFUNGSVORRICHTUNG**
LIQUID CAPTURE AND EVAPORATION DEVICE
DISPOSITIF DE COLLECTE ET D'ÉVAPORATION DE LIQUIDE

(43) Veröffentlichungstag der Anmeldung: 24.10.2018
(73) Patentinhaber: Vitesco Technologies GmbH, 30165 Hannover (DE)
(72) Erfinder: ALBERT, Eusebio-Marius, 300737 Timisoara (RO); PARSAN, Vlad, 300737 Timisoara (RO); FANU, Alexandra, 445100 Carei (RO); GIURGICA, Alexandru, 310359 Arad (RO)

(56) Entgegenhaltungen:
- EP-A1- 1 724 453
- GB-A- 2 160 662
- US-A1- 2004 227 302

## Beschreibung

Die Erfindung betrifft eine Flüssigkeitsauffang- und Verdampfungsvorrichtung zur Verwendung zwischen einem Kühlwasserregelventil eines Fahrzeugs und einer Aktuator-Vorrichtung zur Aktuierung des Ventils. Die Erfindung betrifft ferner eine eine solche Flüssigkeitsauffang- und Verdampfungsvorrichtung umfassende Ventileinheit sowie ein Fahrzeug mit einer solchen Ventileinheit.

Für Fahrzeuge - d.h. Personenkraftwagen oder Nutzfahrzeuge - bestimmte Kühlwasserregelventile finden Anwendung in Kühlwasserkreisläufen von Verbrennungsmotoren. Solch ein Ventil ist gegenüber der umgebenden Peripherie abzudichten. Grundsätzlich sind derartige Ventile dicht bzw. nahezu dicht ausgebildet. Eine gewisse Leckage kann aber dennoch auftreten, insbesondere nach einer gewissen Alterungszeit des Ventils, nach der eine Dichtwirkung der Ventildichtungen nachlassen kann. GB 2 160 662 zeigt eine Vorrichtung, die die Leckage eines Ventils auffangen kann.

Eine Aufgabe einer Ausführungsform der vorliegenden Erfindung ist es, eine Vorrichtung bereitzustellen, welche eine Leckage im Zusammenhang mit einem Kühlwasserregelventil der zuvor beschriebenen Art gegenüber der das Ventil umgebenden Peripherie unterbindet.

Diese Aufgabe wird durch den Anspruch 1 gelöst, der eine Flüssigkeitsauffang- und Verdampfungsvorrichtung unter Schutz stellt. Vorteilhafte Ausführungsformen der Erfindung sind Gegenstand der Unteransprüche.

Es wird eine Flüssigkeitsauffang- und Verdampfungsvorrichtung vorgeschlagen, umfassend einen Abscheidungsbehälter zum Auffangen und Verdampfen von aus dem Kühlwasserregelventil austretenden Flüssigkeitstropfen.

Unter einem Abscheidungsbehälter ist dabei ein Behälter zu verstehen, der ein entsprechendes Volumen bereitstellt, um eine mögliche Leckage des Ventils auffangen und zur Verdampfung bringen zu können. Der Abscheidungsbehälter fungiert daher als ein Kompensationsmittel für ein Kühlwasserregelventil, dessen Dichtigkeit nicht hundertprozentig gewährleistet werden kann, insbesondere nicht nach einer gewissen Alterung.

Der Abscheidungsbehälter weist eine Anbindung an das Ventil sowie eine Anbindung an die Aktuator-Vorrichtung auf. Der Abscheidungsbehälter weist ferner eine Vielzahl von Öffnungen auf, welche einerseits die Flüssigkeitstropfen am Austreten aus dem Behälter hindern und andererseits eine Tropfenverdampfung aufgrund einer auf den Behälter wirkenden Abwärme eines Verbrennungsmotors ermöglichen.

Die vorgeschlagene Flüssigkeitsauffang- und Verdampfungsvorrichtung fängt somit eine mögliche - etwa alterungsbedingte - Leckage des Kühlwasserregelventils auf und lässt sie im Abscheidungsbehälter verdampfen, um sie dann in dampfförmiger Form über die Öffnungen des Abscheidungsbehälters an die Umgebung abführen zu können. Sie unterbindet somit, dass Kühlwasser aus dem Kühlwasserregelventil in die das Ventil umgebende Peripherie des Verbrennungsmotors austritt.

Der Abscheidungsbehälter ist dabei an zumindest einer dem Ventil und/oder dem Aktuator zugewandten Stirnseite mit den Öffnungen versehen, über welche die verdampfte Leckage-Flüssigkeit an die Umgebung abgeführt wird.

Die Öffnungen weisen dabei eine die Flüssigkeitstropfen zurückhaltende Form auf, indem sich die die Öffnungen bildenden Abschnitte des Abscheidungsbehälters ins Innere des Abscheidungsbehälters erstrecken, so dass sie eine umlaufende Erhebung im Inneren des Abscheidungsbehälters bilden. Dadurch wird sichergestellt, dass nur die verdampfte Leckage-Flüssigkeit an die Umgebung abgeführt wird.

Der Durchmesser der Öffnungen verjüngt sich dabei in Richtung des Abscheidungsbehälters. Die Öffnungen können z.B. kegelartig ausgebildet sein, deren Durchmesser sich in Richtung des Inneren des Abscheidungsbehälters verjüngen.

Die Anbindung an das Ventil sowie die Anbindung an die Aktuator-Vorrichtung sind dabei zweckmäßigerweise flüssigkeitsdicht ausgebildet. Dadurch wird sichergestellt, dass über diese Anbindungen keine Leckage-Flüssigkeit in die Umgebung austritt.

Nach einem Aspekt der vorliegenden Erfindung umfasst der Abscheidungsbehälter zumindest zwei miteinander flüssigkeitsdicht verbundene und ein Auffang- und Verdampfungsvolumen bildende Schalen, wobei zumindest eine der beiden Schalen mit den Öffnungen versehen ist, über welche die verdampfte Leckage-Flüssigkeit an die Umgebung abgeführt wird. Es können aber auch beide Schalen mit den Öffnungen versehen sein.

Die Schalen können aus einem umgeformten Blech ausgebildet sein, in welches die Öffnungen gestanzt und dabei die die Öffnungen bildenden Blechabschnitte ins Innere des Abscheidungsbehälters verformt sind, so dass sie eine umlaufende Erhebung im Inneren des Abscheidungsbehälters bilden, welche die Leckage-Flüssigkeit daran hindert, aus dem Abscheidungsbehälter auszutreten.

Es wird ferner eine Ventileinheit mit einem Kühlwasserregelventil, einer Aktuator-Vorrichtung zur Aktuierung des Ventils und einer Flüssigkeitsauffang- und Verdampfungsvorrichtung der zuvor beschriebenen Art vorgeschlagen, wobei die Flüssigkeitsauffang- und Verdampfungsvorrichtung zwischen dem Kühlwasserregelventil und der Aktuator-Vorrichtung angeordnet ist. Anspruch 10 stellt eine solche Anordnung unter Schutz. Ferner wird ein Fahrzeug mit einer Ventileinheit der zuvor beschriebenen Art vorgeschlagen. Anspruch 11 stellt ein solches Fahrzeug unter Schutz.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen:
- Fig.1: eine Ventileinheit mit einer Flüssigkeitsauffang- und Verdampfungsvorrichtung in einer Schnittdarstellung,
- Fig.2: die Ventileinheit aus Fig.1 in einer Schnittdarstellung und mit einer veranschaulichten Leckage-Flüssigkeit sowie einer veranschaulichten Wärmeeinwirkung auf die Flüssigkeitsauffang- und Verdampfungsvorrichtung,
- Fig.3: einen vergrößerten Ausschnitt der Flüssigkeitsauffang- und Verdampfungsvorrichtung in einer Schnittdarstellung,
- Fig.4: einen weiteren vergrößerten Ausschnitt der Flüssigkeitsauffang- und Verdampfungsvorrichtung in einer Schnittdarstellung,
- Fig.5: zwei die Flüssigkeitsauffang- und Verdampfungsvorrichtung bildende Blechschalen und
- Fig.6: die in Fig.5 gezeigten Blechschalen im gefügten Zustand.

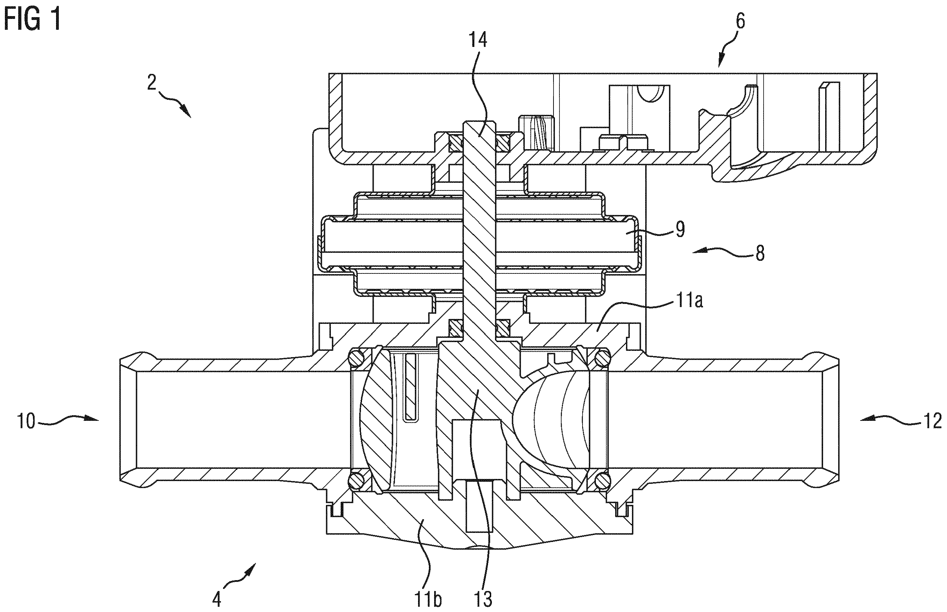

Fig.1 veranschaulicht eine Ventileinheit 2 in einer Schnittdarstellung. Die Ventileinheit 2 umfasst dabei eine Anordnung aus einem Mehrwege-Kühlwasserregelventil 4, einer Aktuator-Vorrichtung 6 sowie einer Flüssigkeitsauffang- und Verdampfungsvorrichtung 8, die zwischen dem Mehrwege-Kühlwasserregelventil 4 und der Aktuator-Vorrichtung 6 angeordnet ist. Das Mehrwege-Kühlwasserregelventil 4 umfasst ein Ventilgehäuse 11a, 11b mit den Ventilanschlüssen 10, 12. Innerhalb des Ventilgehäuses 11a, 11b ist ein Ventilkörper 13 verschwenkbar angeordnet, von dem sich ein Ventilschaft 14 durch das Gehäuseteil 11a und die Flüssigkeitsauffang- und Verdampfungsvorrichtung 8 bis in die Aktuator-Vorrichtung 6 erstreckt, in welcher der Ventilschaft 14 mit einem elektromotorisch aktuierten Stellglied zusammenwirkt.

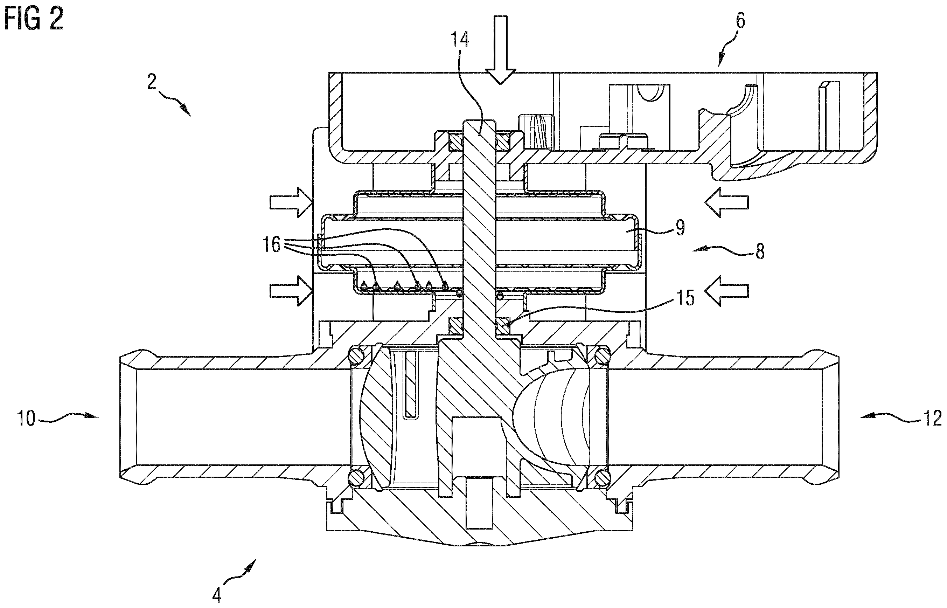

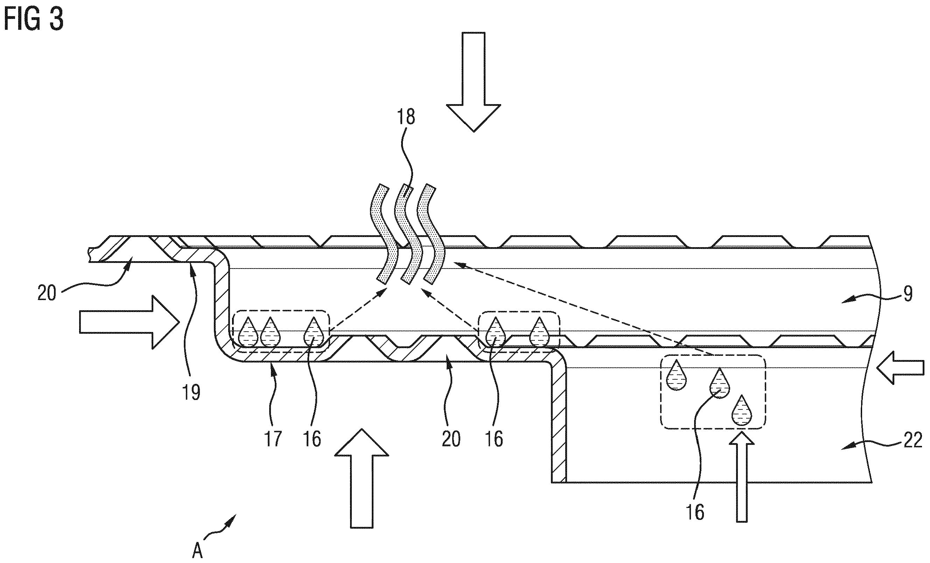

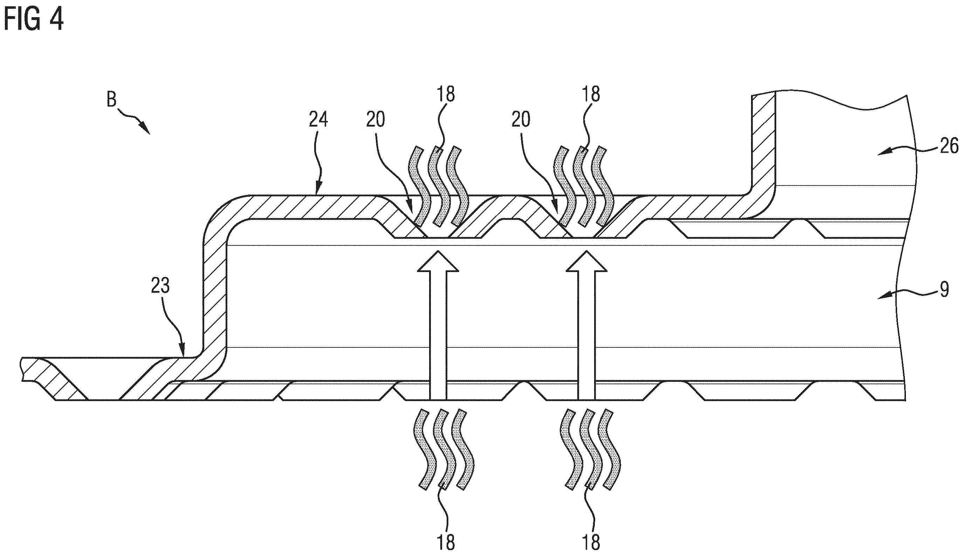

Die Flüssigkeitsauffang- und Verdampfungsvorrichtung 8 umfasst einen Abscheidungsbehälter 9, welcher über den Abschnitt 22 flüssigkeitsdicht an das Ventil 4 angebunden ist, über welche die aus dem Ventil 6 austretenden Flüssigkeitstropfen 16 vom Abscheidungsbehälter 9 aufgefangen werden (Fig.1, Fig.3). Der Abscheidungsbehälter 9 ist zudem über den Abschnitt 26 flüssigkeitsdicht an die Aktuator-Vorrichtung 6 angebunden (Fig.1, Fig.4). Die Abschnitte 22, 26 des Behälters 9 können dabei mit dem Ventil 4 bzw. der Aktuator-Vorrichtung 6 flüssigkeitsdicht verklebt oder durch Kaltschweißen oder Laserschweißen flüssigkeitsdicht verbunden sein. Fig.2 veranschaulicht Flüssigkeitstropfen 16, die über eine schaftseitige Abdichtung 15 des Ventils 4 in den Behälter 9 eintreten.

Der Abscheidungsbehälter 9 weist sowohl ventilseitig als auch aktuatorseitig eine Vielzahl von Öffnungen 20 auf (Fig.3, Fig.4), welche einerseits die Flüssigkeitstropfen 16 am Austreten aus dem Behälter 9 hindern und andererseits eine Tropfenverdampfung 18 aufgrund einer auf den Behälter 9 wirkenden Abwärme seitens eines Verbrennungsmotors - die durch fett gedruckte Pfeile veranschaulicht wird - ermöglichen.

Fig.3 veranschaulicht die dem Ventil 4 zugewandte Ausbildung der Öffnungen 20, die auf zwei zueinander versetzten Stirnseiten 18, 19 ausgebildet sind. Fig.3 veranschaulicht ferner auch die Flüssigkeitstropfen 16, die über die schaftseitige Abdichtung 15 des Ventils 4 in den Behälter 9 eintreten, die auf den Behälter 9 wirkende Abwärme - in Gestalt der fett gedruckten Pfeile - sowie den Leckage-Flüssigkeitsdampf 18, der schließlich über die Öffnungen 20 an die Umgebung abgeführt wird. Zu erkennen ist dabei auch die vorteilhafte Ausbildung der Öffnungen 20, die eine die Flüssigkeitstropfen 16 zurückhaltende Form aufweisen. Dies ist dadurch bedingt, dass sich die die Öffnungen 20 bildenden Abschnitte der Wandung des Abscheidungsbehälters 9 ins Innere des Behälters 9 erstrecken, so dass sie eine umlaufende Erhebung im Inneren des Behälters 9 bilden, welche die Flüssigkeitstropfen 16 zurückhält. Die Öffnungen 20 sind dabei kegelartig ausgebildet, wobei sich der Durchmesser der Öffnungen 20 in Richtung des Behälters 9 verjüngt.

Fig.4 hingegen veranschaulicht die der Aktuator-Vorrichtung zugewandte Ausbildung der Öffnungen 20, die ebenfalls auf zwei zueinander versetzten Stirnseiten 23, 24 ausgebildet sind. Fig. 4 veranschaulicht ferner auch den Leckage-Flüssigkeitsdampf 18, der über die Öffnungen 20 an die Umgebung abgeführt wird.

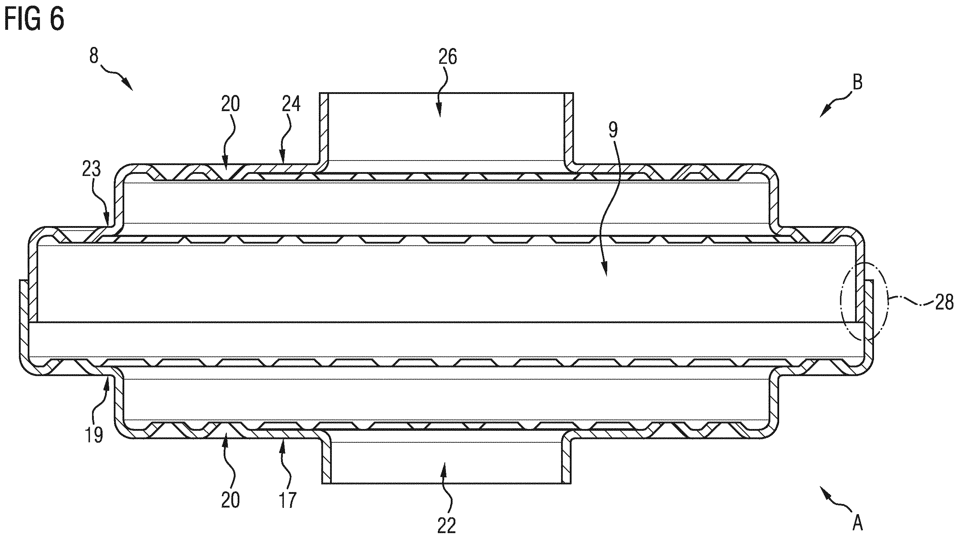

Der Abscheidungsbehälter 9 wird von zwei tellerartig bzw. schalenartig umgeformten, kreisrunden Blechen A, B gebildet, die miteinander gefügt und flüssigkeitsdicht verbundenen sind (Fig.3, Fig.4, Fig.5) und die nach ihrer Fügung (Fig.6) ein entsprechendes Auffang- und Verdampfungsvolumen bilden. Die Blechteller bzw. Blechschalen A, B können dabei miteinander verklebt oder aber durch Kaltschweißen oder Laserschweißen miteinander verbunden sein. Die flüssigkeitsdichte Verbindung wird dabei im Bereich 28 ausgebildet, in dem die beiden Blechteller bzw. Blechschalen A, B beim Ineinanderschieben miteinander überlappen (Fig.6).

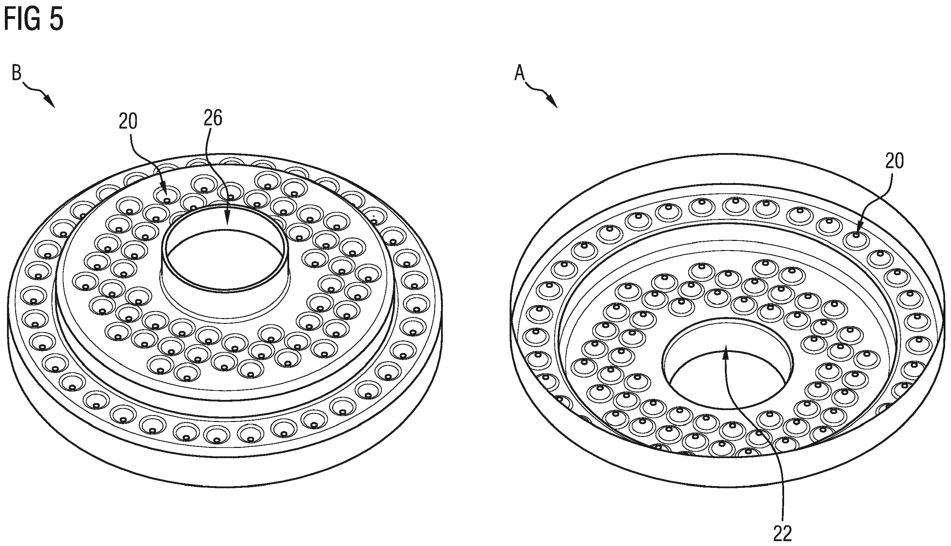

Die Bleche A, B sind dabei derart umgeformt, dass sie jeweils zwei zueinander in Längsrichtung versetzte, Stirnseiten 18, 19, 23, 24 bildende Blechabschnitte aufweisen (Fig.3, Fig.4 i.V.m. Fig.5), die im Wesentlichen parallel zueinander angeordnet sind und in welche die kegelartig ausgebildeten Öffnungen 20 gestanzt sind. Dabei sind die die Öffnungen 20 bildenden Blechabschnitte ins Innere des Abscheidungsbehälters 9 verformt, so dass sie eine umlaufende Erhebung im Inneren des Abscheidungsbehälters 9 bilden, welche die Flüssigkeitstropfen 16 zurückhält (Fig.3).

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

## Patentansprüche

1. Flüssigkeitsauffang- und Verdampfungsvorrichtung zur Verwendung zwischen einem Kühlwasserregelventil (4) und einer Aktuator-Vorrichtung (6) zur Aktuierung des Ventils, umfassend
einen Abscheidungsbehälter (9) zum Auf fangen und Verdampfen von aus dem Kühlwasserregelventil (4) austretenden Flüssigkeitstropfen (16), wobei der Abscheidungsbehälter (9) eine Anbindung (22) an das Ventil (4) sowie eine Anbindung (26) an die Aktuator-Vorrichtung (6) aufweist,
wobei der Abscheidungsbehälter (9) eine Vielzahl von Öffnungen (20) aufweist, welche einerseits die Flüssigkeitstropfen (16) am Austreten aus dem Behälter (9) hindern und andererseits eine Tropfenverdampfung (18) aufgrund einer auf den Behälter (8) wirkenden Abwärme ermöglichen.

2. Vorrichtung nach Anspruch 1, wobei der Abscheidungsbehälter (8) an zumindest einer dem Ventil (4) und/oder dem Aktuator (6) zugewandten Stirnseite (18, 24) mit den Öffnungen (20) versehen ist.

3. Vorrichtung nach Anspruch 1 oder 2, wobei die Öffnungen (20) eine die Flüssigkeitstropfen zurückhaltende Form aufweisen, indem sich die die Öffnungen (20) bildenden Abschnitte des Abscheidungsbehälters (9) ins Innere des Abscheidungsbehälters (9) erstrecken, so dass sie eine umlaufende Erhebung im Inneren des Abscheidungsbehälters (9) bilden.

4. Vorrichtung nach Anspruch 3, wobei sich der Durchmesser der Öffnungen (20) in Richtung des Abscheidungsbehälters (9) verjüngt.

5. Vorrichtung nach Anspruch 4, wobei die Öffnungen (20) kegelartig ausgebildet sind.

6. Vorrichtung nach einem der vorhergehenden Ansprüche, wobei die Anbindung (22) an das Ventil (4) sowie die Anbindung (26) an die Aktuator-Vorrichtung (6) flüssigkeitsdicht sind.

7. Vorrichtung nach einem der vorhergehenden Ansprüche, wobei der Abscheidungsbehälter (9) zumindest zwei miteinander flüssigkeitsdicht verbundene und ein Auffang- und Verdampfungsvolumen bildende Schalen (A, B) umfasst, wobei zumindest eine der beiden Schalen (A, B) mit den Öffnungen (20) versehen ist.

8. Vorrichtung nach Anspruch 7, wobei beide Schalen (A, B) mit den Öffnungen (20) versehen sind.

9. Vorrichtung nach Anspruch 7 oder 8, wobei die Schalen (A, B) aus einem umgeformten Blech ausgebildet sind, in welches die Öffnungen (20) gestanzt und dabei die die Öffnungen (20) bildenden Blechabschnitte ins Innere des Abscheidungsbehälters (9) verformt sind, so dass sie eine umlaufende Erhebung im Inneren des Abscheidungsbehälters (9) bilden.

10. Ventileinheit mit einem Kühlwasserregelventil (4), einer Aktuator-Vorrichtung (6) zur Aktuierung des Ventils und einer Flüssigkeitsauffang- und Verdampfungsvorrichtung (8) nach einem der Ansprüche 1 bis 9, wobei die Flüssigkeitsauffang- und Verdampfungsvorrichtung (8) zwischen dem Kühlwasserregelventil (4) und der Aktuator-Vorrichtung (6) angeordnet ist.

11. Fahrzeug mit einer Ventileinheit nach Anspruch 10.

## Claims

1. Liquid collection and evaporation device for use between a cooling water regulating valve (4) and an actuator device (6) for actuating the valve, comprising
a separation tank (9) for collecting and evaporating liquid droplets (16) emerging from the cooling water regulating valve (4), wherein the separation tank (9) has a connection (22) to the valve (4) and a connection (26) to the actuator device (6),
wherein the separation tank (9) has a multiplicity of openings (20) which firstly prevent the liquid droplets (16) from emerging from the tank (9) and secondly permit droplet evaporation (18) because of waste heat acting on the tank (9).

2. Device according to Claim 1, wherein the separation tank (9) is provided with the openings (20) on at least one end side (18, 24) facing the valve (4) and/or the actuator (6).

3. Device according to Claim 1 or 2, wherein the openings (20) have a shape holding back the liquid droplets by those portions of the separation tank (9) which form the openings (20) extending into the interior of the separation tank (9) such that they form an encircling elevation in the interior of the separation tank (9).

4. Device according to Claim 3, wherein the diameter of the openings (20) tapers in the direction of the separation tank (9) .

5. Device according to Claim 4, wherein the openings (20) are of conical design.

6. Device according to one of the preceding claims, wherein the connection (22) to the valve (4) and the connection (26) to the actuator device (6) are liquid-tight.

7. Device according to one of the preceding claims, wherein the separation tank (9) comprises at least two trays (A, B) which are connected in a liquid-tight manner to one another and form a collection and evaporation volume, wherein at least one of the two trays (A, B) is provided with the openings (20) .

8. Device according to Claim 7, wherein the two trays (A, B) are provided with the openings (20).

9. Device according to Claim 7 or 8, wherein the trays (A, B) are formed from a deformed metal sheet into which the openings (20) are punched and, in the process, the sheet metal portions forming the openings (20) are deformed into the interior of the separation tank (9) such that they form an encircling elevation in the interior of the separation tank (9) .

10. Valve unit with a cooling water regulating valve (4), an actuator device (6) for actuating the valve and a liquid collection and evaporation device (8) according to one of Claims 1 to 9, wherein the liquid collection and evaporation device (8) is arranged between the cooling water regulating valve (4) and the actuator device (6).

11. Vehicle with a valve unit according to Claim 10.

## Revendications

1. Dispositif de collecte et d'évaporation de liquide destiné à être utilisé entre une vanne de régulation d'eau de refroidissement (4) et un dispositif d'actionnement (6) destiné à actionner la vanne, ledit dispositif de collecte et d'évaporation de liquide comprenant
un récipient collecteur (9) destiné à la collecte et à l'évaporation de gouttes de liquide (16) sortant de la vanne de régulation d'eau de refroidissement (4), le récipient collecteur (9) comportant un élément (22) de raccordement à la vanne (4) et un élément (26) de raccordement au dispositif d'actionnement (6),
le récipient collecteur (9) comportant une pluralité d'ouvertures (20) qui empêchent d'une part les gouttes de liquide (16) de sortir du récipient (9) et qui permettent d'autre part l'évaporation de gouttes (18) en raison de la chaleur dissipée agissant sur le récipient (8).

2. Dispositif selon la revendication 1, le récipient collecteur (8) est muni des ouvertures (20) sur au moins un côté frontal (18, 24) dirigé vers la vanne (4) et/ou l'actionneur (6).

3. Dispositif selon la revendication 1 ou 2, les ouvertures (20) ont une forme permettant de retenir les gouttes de liquide en ce que les parties du récipient collecteur (9) qui forment les ouvertures (20) s'étendent jusqu'à l'intérieur du récipient collecteur (9) de manière à former une élévation périphérique à l'intérieur du récipient collecteur (9).

4. Dispositif selon la revendication 3, le diamètre des ouvertures (20) diminuant en direction du récipient collecteur (9) .

5. Dispositif selon la revendication 4, les ouvertures (20) étant en forme de cône.

6. Dispositif selon l'une des revendications précédentes, l'élément (22) de raccordement à la vanne (4) et l'élément (26) de raccordement au dispositif d'actionnement (6) étant étanches aux liquides.

7. Dispositif selon l'une des revendications précédentes, le récipient collecteur (9) comprenant au moins deux coques (A, B) qui sont reliées entre elles de manière étanche aux liquides et qui forment un volume de collecteur et d'évaporation, l'une au moins des deux coques (A, B) étant munies des ouvertures (20).

8. Dispositif selon la revendication 7, les deux coques (A, B) étant munies des ouvertures (20).

9. Dispositif selon la revendication 7 ou 8, les coques (A, B) étant conçues à partir d'une tôle mise en forme dans laquelle les ouvertures (20) sont ménagées par estampage et les parties de tôle formant les ouvertures (20) étant ainsi mises en forme pour obtenir l'intérieur du récipient collecteur (9) de manière à former une élévation périphérique à l'intérieur du récipient collecteur (9).

10. Unité formant vanne comprenant une vanne de régulation d'eau de refroidissement (4), un dispositif d'actionnement (6) destiné à l'actionnement de la vanne et un dispositif de collecte et d'évaporation de liquide (8) selon l'une des revendications 1 à 9, le dispositif de collecte et d'évaporation de liquide (8) étant disposé entre la vanne de régulation d'eau de refroidissement (4) et le dispositif d'actionnement (6).

11. Véhicule comprenant une unité formant vanne selon la revendication 10.
